(19) Europäisches Patentamt
European Patent Office
Office européen des brevets

(11) **EP 2 810 770 A1**

(12) **EUROPEAN PATENT APPLICATION**

(43) Date of publication:
**10.12.2014 Bulletin 2014/50**

(51) Int Cl.:
*B32B 3/12* (2006.01)  *E04B 1/74* (2006.01)
*E04C 2/36* (2006.01)

(21) Application number: **14169989.2**

(22) Date of filing: **27.05.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **04.06.2013 IT PI20130048**

(71) Applicant: **Masini, Rolando
57122 Livorno (IT)**

(72) Inventor: **Masini, Rolando
57122 Livorno (IT)**

(74) Representative: **Celestino, Marco
ABM Agenzia Brevetti & Marchi,
Viale Giovanni Pisano, 31
56123 Pisa (IT)**

(54)    **Improved structure of composite soundproofing material**

(57)    An improved structure of composite soundproofing material (1) comprises at least one container body (10) having at least one recess (15) in which, in use, a filling material (50) is arranged. The filling material (50) comprises a predetermined amount of barite in granules having a predetermined size. This way, a composite material is obtained having a high mass for the high density, or specific mass, of the barite. Therefore, under a same available volume, the composite material according to the invention can ensure a most effective sound insulation with respect to the prior art solutions [Fig. 8].

# Fig. 5

EP 2 810 770 A1

**Description**

The present invention relates to the field of sound absorbent and soundproofing materials used to acoustically insulate two environments and, in particular, it relates to an improved structure of composite soundproofing material.

Description of the prior art

As well known, materials are used, in particular in the building industry, to acoustically insulate two environments.

These materials are used, for example, to acoustically insulate a room, or an apartment, from an adjacent room, or apartment.

Different kinds of materials are used to make sound absorbent walls, or walls with a high soundproofing capacity.

The acoustic insulation or "sound insulation" is given by the "filtering" capacity of a wall to the passage of the sound waves, or acoustic vibrations.

For making a wall capable of acoustically insulating two environments different materials can be used. For example, a sound absorbent material that is used is the cork that is installed in direct contact with the wall and combining the layer of cork with a stiff finishing panel usually in plasterboard, wood, etc. Such a group ensures a good level of acoustic insulation taking away from the room a very little space (about 4-5 cm.).

Other solutions provide using heavy material as bituminous sheaths having a high density, lead, or, in any case, products having the capacity to increase the weight of the finishing panel.

Also the increasing of thickness of the sound absorbent material located between the wall and the finishing panel contributes in a very important way to increase the level of acoustic insulation of the counter-wall.

Another example of material having sound absorbent properties is disclosed in WO2012076164. In this case the material comprises two external layers and a structure comprising wavy walls defining channels filled with burned silica sand.

Another example of a sound absorbent material from a structural point of view is disclosed in DE19709620. Also in this case a support structure is provided comprising a wavy wall, or a honeycomb structure, defining a plurality of channels. These are filled with a granular material such as sand, or with a powder material, or with both the material mixed together.

Still another example of sound absorbent sheet is disclosed in DE19812747 wherein a support structure is also provided in this case equipped with a plurality of channels arranged to contain a filling material, such as argillite, balls of glass, or granules of mica.

Other prior art documents having as object panels for building industry are described in US3652360, DE29803675 and US2008/236943.

However, the prior art solutions are not able to acoustically insulate the two environments between which the sound absorbent panel, or material, is installed.

In addition, the prior art materials above described imply high costs of the raw materials.

Summary of the invention

It is then a feature of the present invention to provide an improved structure of composite soundproofing material for overcoming the above described drawbacks of the prior art materials and then, realizing, a more efficient acoustic insulation.

It is also a feature of the present invention to provide an improved structure of composite soundproofing material that is also able to protect from the radiations.

These and other features are accomplished with one exemplary improved structure of composite soundproofing material, according to the present invention, comprising:

- a container body having at least one recess;
- a filling material arranged, in use, in said, or each, recess of said container body;

whose main feature is that the filling material comprises a predetermined amount of barite in granules having a predetermined size.

The technical solution provided by the present invention allows to obtain a composite material having a high mass owing to the high density of the barite. Therefore, with respect to the prior art solutions, under the same available volume, the material, according to the present invention, ensures a more efficient acoustic insulation. Furthermore, owing to the opacity to the X-ray of the barite, or sulphate of barium, and to its screening capacity with respect to the radiations, the composite material, according to the present invention, is particularly indicated to make panels, or partition walls, destined to be used in places contaminated by radiations, such as the radiological rooms of the hospitals.

Preferably, the granules of barite have a size set between 0.06 and 2 mm. Therefore, the barite is used in the form of sand.

In particular, the amount of barite present in the filling material can be equal to, or higher than 40% of the total volume of the filling material, advantageously, at least equal to, or higher than 50% of the volume, for example higher than the 70%. In a possible exemplary embodiment at least the 90% by volume of the filling material can be barite in granules. In a further exemplary embodiment the filling material is 100% barite, i.e. the filling material is constituted exclusively of barite.

Preferably, the improved structure of composite soundproofing material, also comprises a layer of a resilient material having a predetermined thickness.

In particular, the layer of resilient material is arranged, in use, adjacent to said container body containing the filling material.

Advantageously, the layer of resilient material is a layer of rubber in the form of granules having a predetermined size.

Alternatively, the resilient material can be a slab of resilient material, in particular a slab of rubber.

Advantageously, the thickness of the layer of resilient material can be set between 0.3 mm and 20 mm, advantageously, set between 0.4 mm and 15 mm.

Alternatively, or in addition, to the rubber, the layer of resilient material can be a layer of packaging material, such as air cushions, or pluriball. Still in another exemplary embodiment the layer of resilient material can be a layer of expanded polyethylene, in particular expanded reticulated polyethylene.

Advantageously, the filling material in addition to the barite can comprise at least one component selected from the group consisting of:

- siliceous sand;
- quartz sand;
- balls of expanded glass;
- glass powder;
- granules of plastic material, in particular recycled plastic material ;
- or a combination thereof.

In particular, the different components of the filling material can be present in single layers, or can be mixed to each other.

In an exemplary embodiment of the invention, the improved structure of composite soundproofing material comprises a plurality of container bodies overlapped one another, in order to form a stack of containers bodies, at least one container body of said plurality arranged to contain, in use, a respective filling material consisting of a predetermined amount of barite in granules.

Preferably, between two successive container bodies of said stack of container bodies at least one layer of resilient material is provided.

This way, owing to the high density of the barite, a structure of composite material is obtained having a high soundproofing action for the "mass-spring-mass" principle.

Advantageously, the structure of composite material comprises:

- a first container body arranged to contain, in use, a first filling material;
- a second container body arranged to contain, in use, a second filling material, said first and said second filling material containing an amount of barite at least equal to 40% of the total volume of the respective filling material;
- at least one layer of resilient material located between said first and said second container body.

In an exemplary embodiment, the improved structure of composite soundproofing material comprises:

- a first container body arranged to contain a first filling material comprising granules of barite in an amount at least equal to 40% of the total volume of said first filling material;
- a layer of predetermined thickness of a resilient material adjacent, in use, to said first container body;
- a second container body arranged adjacent to said layer of resilient material opposite to said first container body, said second container body arranged to contain a second filling material, said second filling material being selected from the group consisting of:

  - granules of barite;
  - siliceous sand;
  - quartz sand;

- balls of expanded glass;
- glass powder;
- granules of plastic material, in particular recycled plastic material;
- or a combination thereof.

In an exemplary embodiment of the invention, the container body comprises at least one cardboard panel, in particular wavy cardboard, defining a plurality of recesses.

Alternatively, the container body provides a box-like body comprising a plurality of recesses, in particular longitudinal to the box-like body, each recess arranged to house, in use, the filling material.

Advantageously, the container body is made of a resilient material.

Brief description of the drawings

The invention will be now shown with the following description of an exemplary embodiment thereof, exemplifying but not limitative, with reference to the attached drawings in which:

- Fig. 1 diagrammatically shows a perspective elevational side view of a first exemplary embodiment of a container body that can be used to provide the improved structure of composite material according to the present invention;
- Fig. 2 diagrammatically shows a perspective elevational side view of a possible exemplary embodiment of a container body that can be used to provide the improved structure of composite material according to the present invention;
- Fig. 3 diagrammatically shows a perspective elevational side view of another possible exemplary embodiment of a container body that can be used to provide the improved structure of composite material according to the present invention;
- Fig. 4 diagrammatically shows a perspective elevational side view of a first exemplary embodiment of an improved structure of composite material according to the present invention;
- Fig. 5 shows a cross sectional view of the improved structure of composite material of Fig. 4 according to arrows V-V;
- Fig. 6 shows a perspective elevational side view of an exemplary embodiment of the improved structure of composite material of Fig. 4;
- Figs. 7 to 12 show perspective side elevational views of other possible exemplary embodiments of the improved structure of composite material of Fig. 4 provided by the present invention;
- Fig. 13 attracts diagrammatically the trend of the coefficient of linear attenuation of the lead and of the barium responsive to the energy expressed in MeV;
- Fig. 14 diagrammatically shows the trend of the coefficients of linear attenuation of the lead and of the barium responsive to the energy expressed in MeV in the range of energy of interest.

Detailed description of some exemplary embodiments

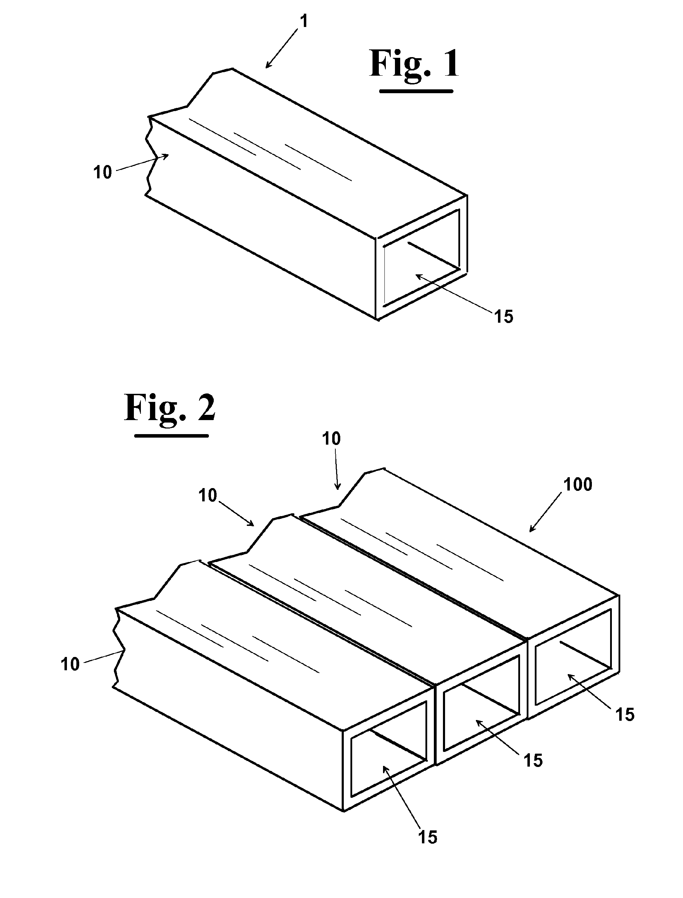

As diagrammatically shown in Fig. 1 an improved structure 1 of composite soundproofing material, according to the present invention, comprises a container body 10 having at least one recess 15 arranged to house, in use, a filling material 50.

The container body 10 may have substantially a box-like shape and be made of cardboard, or plastic material, or metal material. As diagrammatically shown in Fig. 2, the possibility is provided of using more box-like bodies 10, in order to form a container body 100. For example, each container body 10 has mutual engagement elements (not shown in the figures) arranged to constrain the container body 10 to another container body 10 adjacent to it. The mutual engagement elements can be, for example, portions protruding from a container body 10 arranged to engage with recesses provided on a container body 10 adjacent to it. Other possible exemplary embodiments of the mutual engagement elements provide longitudinal guide made on one side of a container body 10 at which portions, protruding longitudinally from a container body arranged in use adjacent to it, are adapted to slidingly engage.

It is also provided that the structure of composite material 1 comprises a container body 10 having a determined number of recesses 15, in particular longitudinal recesses (Fig. 2).

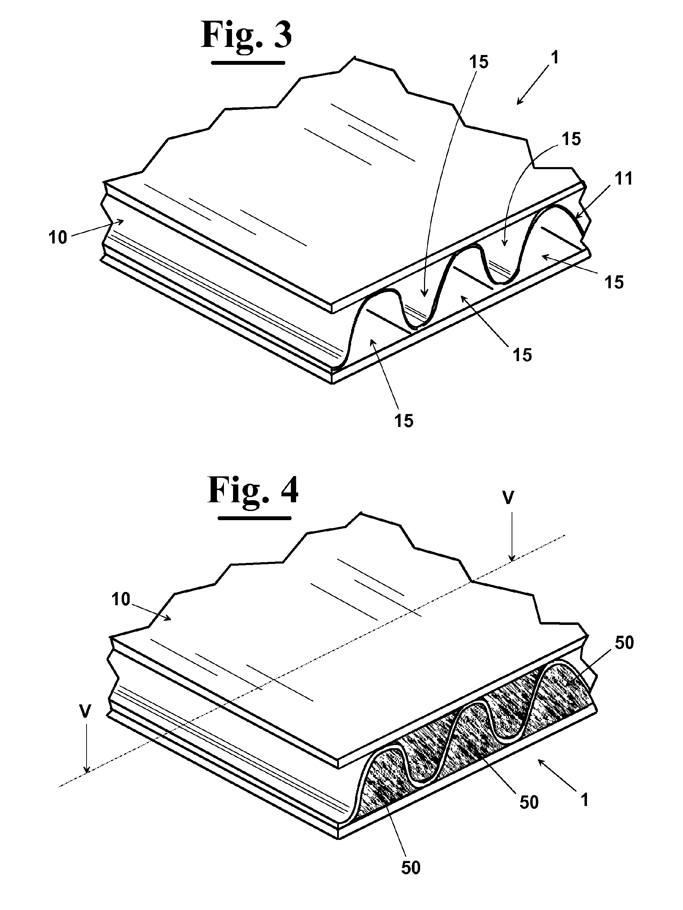

In a particular exemplary embodiment of the invention, the container body 10 provides a wavy cardboard having at least one wavy wall 11 arranged to divide the recess 15 of the cardboard in a plurality of recesses 15 (Fig. 3).

According to the present invention, the filling material 50 comprises a predetermined amount of barite in granules having a predetermined size. More in detail, the barite can be present in the filling material 50 in an amount equal to, or higher than 40% of the total volume of the filling material 50, advantageously, equal to, or higher than 50% of the total volume of the filling material 50. It is also provided that the filling material 50 is constituted exclusively of granules of barite, i.e. that the filling material 50 is 100% barite. Preferably, the granules of barite have a size set between 2 mm and 0.06 mm. Therefore, the barite is present in the form of *"barite sand"*.

If the filling material 50, in addition to the barite, comprises other components, such components can be selected from the group consisting of: siliceous sand, quartz sand, balls of expanded glass, glass powder, granules of plastic material, in particular recycled plastic material, or a combination thereof. It is, in any case, provided the possibility of using also other materials such as rubber, plastic material, etc.

The use of barite as filling material allows to obtain a highly effective acoustic insulation for the reasons described below. The barite that, as well known, is a mineral of barium, and precisely barium sulphate ($BaSO4$), has a high density, or specific mass, that is about 4.5 g/cm$^3$. Therefore, under the same volume, the use of the barite allows to obtain a product having a very high mass, in particular if compared with the mass of the commonly used sound absorbent materials, or of the materials, such as the siliceous sand, or the quartz sand, which have a density that is equal to about half of the density of the barite. This allows to obtain a very effective acoustic insulation, since, as well known, the acoustic insulation increases increasing the mass of the used materials.

In the preferred exemplary embodiment of the invention, the improved structure 1 also comprises a layer 70 of a resilient material, for example rubber, or, packaging material, such as pluriball, or expanded polyethylene, in particular expanded reticulated polyethylene.

As above disclosed the filling material 50 can be made exclusively of barite, or provide a mixture of barite with at least one of the above described components, i.e. siliceous sand, quartz sand, balls of expanded glass, glass powder, granules of plastic material, in particular recycled plastic material. More in detail, the barite and the, or each, additional component can be mixed in predetermined amount in a same container body 10.

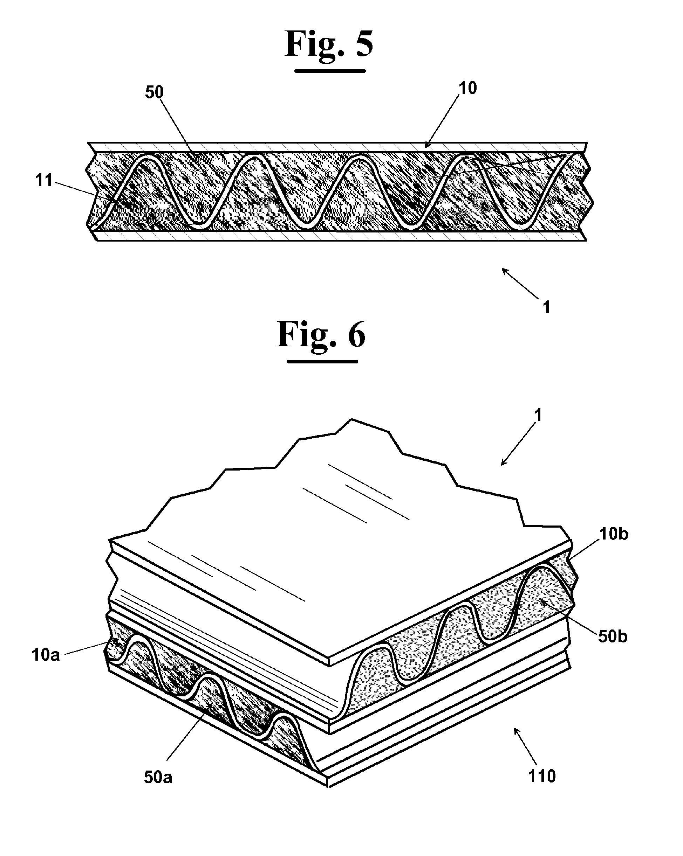

In the exemplary embodiment of Fig. 6, the structure 1 comprises a plurality of container bodies 10 overlapped one another, in order to form a stack 110. Each container body 10 is adapted to contain a different filling material 50. For example, the structure 1 can comprise a first container body 10a containing barite and a second container body 10b containing a different material, such as quartz sand , or siliceous sand, or another of the above described components alternative to the barite. The stack 110 can be in any case made by more container bodies 10 each of which containing a same filling material 50.

For example, in the exemplary embodiment of Fig. 6 the structure 1 comprises a first container body 10a arranged to contain a first filling material 50a comprising granules of barite in an amount at least equal to 40% of the total volume, for example higher than 50%, and a second container body 10b arranged to contain a second filling material 50b such as siliceous sand, quartz sand, glass powder, etc.

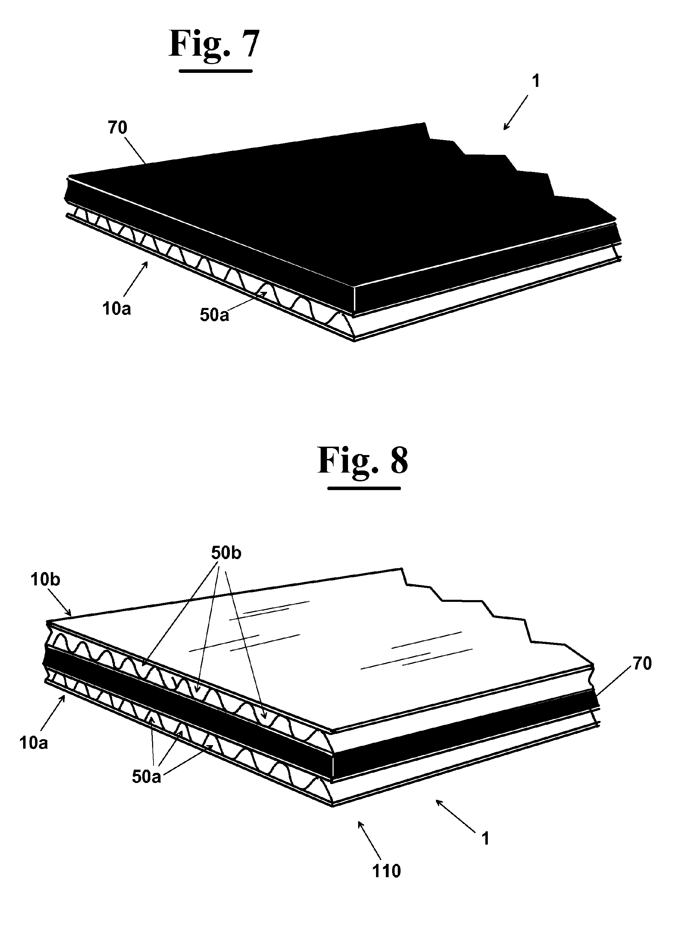

In Fig. 7, the structure 1 comprises, instead, a container body 10 arranged to house, in use, the filling material 50 based on barite and a layer of resilient material 70, for example a layer of rubber in granules, or a slab of rubber. Such a solution can be for example used in combination with a wall made of cement, or masonry, of the building in which the composite material 1 is installed, in such a way to provide on the whole a "mass-spring-mass" system.

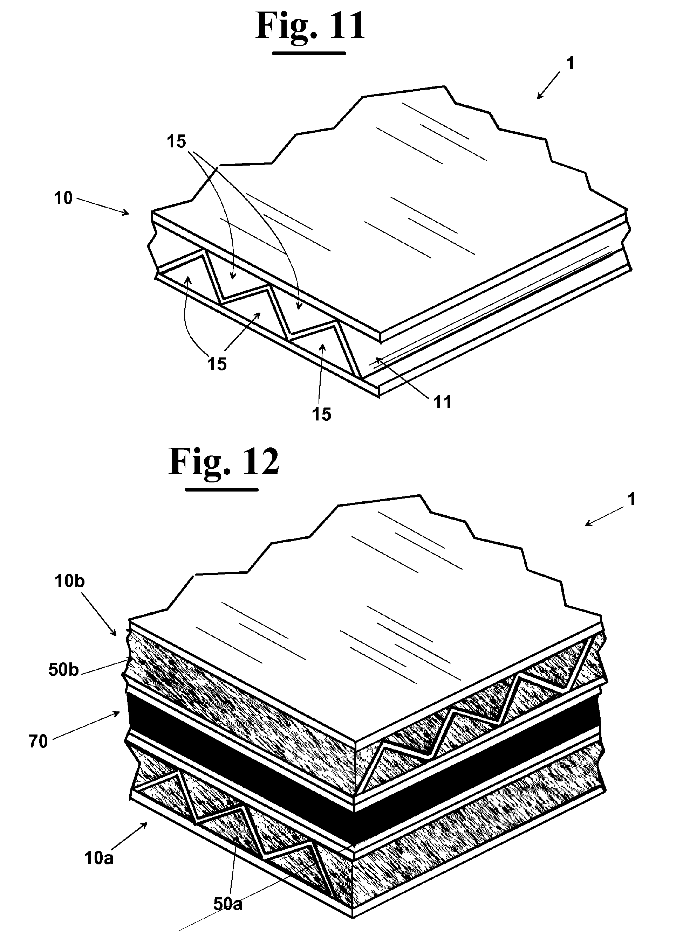

In a further exemplary embodiment of the Figs. 8 and 12, the structure of composite material 1 comprises a first container body 10a, a second container body 10b and a layer of resilient material 70 arranged between them.

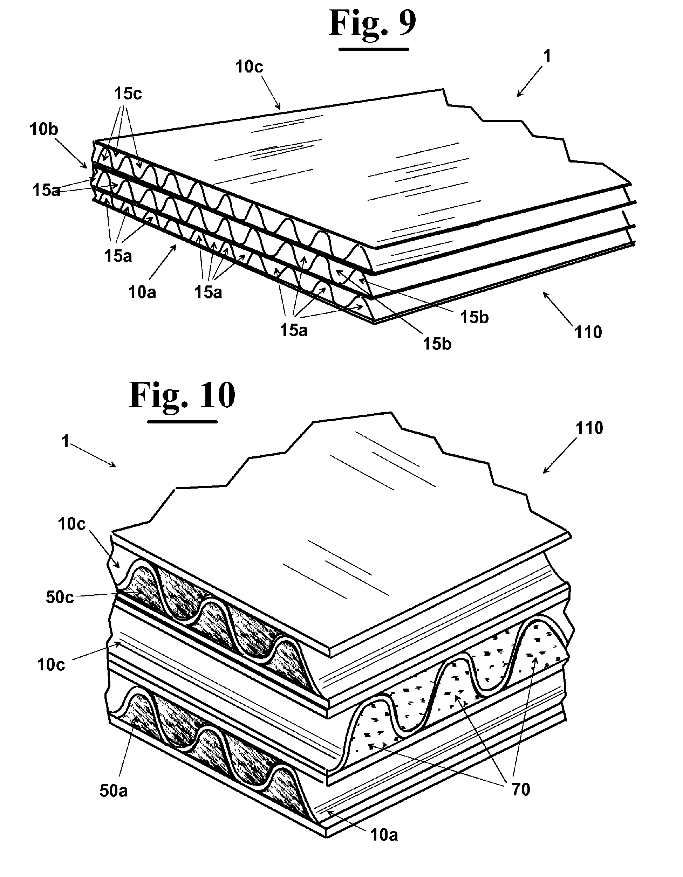

In the exemplary embodiment of Fig. 9, instead, a third container body 10c is provided arranged opposite to the first container body 10a with respect to the second hollow container body 10b. More in detail, the container body 10c is adapted to contain a third filling material 50c. This, analogously to the first container body 10a, can be selected from the group consisting of: a filling material constituted exclusively of barite, or, exclusively of quartz sand, or siliceous sand, or exclusively of balls of expanded glass, or of glass powder, or of another of the above described components. It is, in any case, also provided that each filling material is obtained mixing two, or more of the above described components in suitable proportions according to the kind of application to which the structure 1, according to the invention, is destined.

In case of more overlapped container bodies 10, the possibility is provided that all of them have a same spatial orientation, i.e. that the recesses 15 of the different container bodies 10 are arranged substantially parallel (Fig. 9), or they are rotated of 90° one with respect to the other, in order to provide a structure 1 in which the recesses 15 are arranged substantially orthogonal (Fig. 10). In the latter case the stiffness of the overall structure 1 is increased.

In the case of a stack 110 of container bodies 10 such as shown in Fig. 10, it is also provided that the container body is made of a resilient material. In this case, the "mass-spring-mass" system is made by the group of the container body 10 and of the filling material 50.

Alternatively, the container body 10 can be made of a flexible material.

In particular, in the latter two cases it is possible to provide that in the case of a stack 110 of container bodies 10 the filling material 50 of a container body, for example of the container body 10 located between two container bodies 10 of the stack, is a resilient material, in particular a resilient material provided in granules.

The different recesses, or cells, 15 in which the container bodies 10 are divided by the walls 11 may have different shapes. In particular, in Figs. 3 to 10, the wall 11 is substantially wavy and consists of curvilinear portions, whereas in Figs. 11 to 12, the wall 11 comprises substantially linear segments inclined in such a way to form a zigzag structure.

All the exemplary embodiments of the present invention, that provide the use of barite and a layer of resilient material 70 allow to obtain an acoustic insulation even most effective with respect to the use of the sole barite for the essential physic law of the acoustic insulation, known as the "mass-spring-mass" law. In particular, the presence of the layer of resilient material provides an effective acoustic reduction against the noises produced by percussion.

EXAMPLES AND TESTING RESULTS

The results given hereafter relate to the evaluation with "Monte Carlo" code of the attenuation properties of photons (X-rays and gamma rays) of panels of different thickness made using composite soundproofing material, according to the present invention.

The energy of the considered photons have been the typical one X-ray plants for medical use: 50 keV ÷ 300 keV.

The attenuation properties have been determined calculating the equivalent thickness of lead for each sheet versus the energy of the photons in the range above described.

More in detail, the panel subject to analysis provides a case of wavy cardboard filled with a mixture of sands based on barite sand (sulphate of barium, $BaSO_4$) and having density of 2.2 g/cm$^3$.

The tests have been made for 5 types of panels, all of size 600 mm × 1200 mm, but with different thickness:

- Sheet A: thickness 10 mm (22 kg/m$^2$);
- Sheet B: thickness 15 mm (33 kg/m$^2$);
- Sheet to + A: thickness 20 mm (44 kg/m$^2$);
- Sheet to + B: thickness 25 mm (55 kg/m$^2$);
- Sheet B + B: thickness 30 mm (66 kg/m$^2$).

For computing the thickness of lead equivalent to the panels described above, the Monte Carlo MCNPX version 2.6 code has been used.

The first part of the simulations has regarded the computing of the attenuation capacity of the panel. Then, the thickness of lead has been determined necessary to obtain the computed value of attenuation.

The use of the Monte Carlo code allows to sample the values of energy, of the direction and of the length of path of the photons by means of a distribution of probability that takes into account the possible interactions to which the photon can be subjected in its passage through the matter, up to its absorption or up to when its energy becomes negligible.

The attenuation of a mono-directional beam of photons of energy E0 can be described by the following exponential law:

$$\Phi = \Phi_0 e^{-\mu a}$$

where $\Phi_0$ is the number of incident photons for unity of area of the adsorbing panel of thickness a, F is the number of photons for unity of area that crosses the panel and $\mu$ is the coefficient of linear attenuation of the material of the panel, a parameter that represents the probability of interactions of the photons for unity of path in the adsorbing means. Its value is measured in cm$^{-1}$ and depends on the energy of the photon and on the atomic number of the adsorbent material. The exponential model provides that the photon, once has had an interaction, is removed from the beam, neglecting the events of scattering that do not remove the photon but that change only the energy and the direction of motion.

The exponential model is then corrected introducing a buildup factor B, that depends on the energy of the incident photon, on the material and on its thickness ($\Phi_0$ is still evaluated to the energy E0):

$$\Phi = B(\mu a)\Phi_0 e^{-\mu a}$$

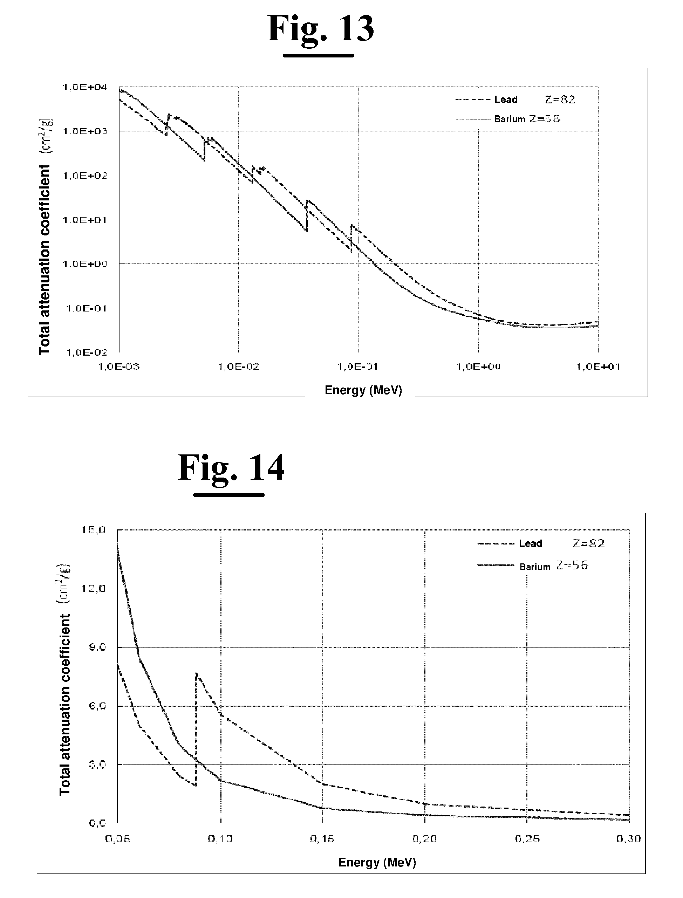

In Fig. 13 the trend of the coefficient of linear attenuation is given of the lead and of the barium responsive to the energy expressed in MeV. The barium, for the high atomic number (Z=56), is the element that in the panel causes the greatest part of the photonic attenuation;

Fig. 14 shows the trend of the coefficient of linear attenuation of the lead and of the barium in the range of energy of interest. A decreasing trend can be noted of the coefficient $\mu$ with respect to the energy, to which it is overlapped, in case of the lead, a sharp discontinuity (so called limit of absorption) to the energy of 88 keV, at the bond energy of the electrons of the shell K of the atom of lead same.

The results obtained by the simulations are given in Tab. 1. For each type of panel, versus the energy of the photon, is responsive to the equivalent thickness of lead (in mm). An average of the equivalent thicknesses for each panel in the energy field of interest is indicated in Tab. 2.

The abrupt decreasing of equivalent thickness of lead in the passage from 80 to 90 keV is responsive to the presence of the absorption limit of the lead at 88 keV.

On the basis of the obtained results it is possible therefore to conclude that the panel, according to the present invention, in addition to the soundproofing properties is also able to extenuate the X-ray and gamma ray.

Tab. 1 Nominal thickness of the panel and equivalent values in mm of lead

| Kind of panel | Thickness (mm) | Equivalent thickness in lead (mm) | | | | | | | |
|---|---|---|---|---|---|---|---|---|---|
| | | 50 keV | 80 keV | 90 keV | 100 keV | 150 keV | 200 keV | 250 keV | 300 keV |
| A | 10 | 1.3 | 2.0 | 0.8 | 0.6 | 0.5 | 0.5 | 0.6 | 0.6 |
| B | 15 | 1.8 | 3.0 | 1.4 | 1.0 | 0.8 | 0.8 | 0.9 | 0.9 |
| A+A | 20 | 2.6 | 4.1 | 1.9 | 1.5 | 1.0 | 1.1 | 1.1 | 1.2 |
| A+B | 25 | 3.1 | 5.1 | 2.5 | 1.9 | 1.3 | 1.3 | 1.4 | 1.6 |
| B+B | 30 | 3.6 | 6.1 | 3.1 | 2.4 | 1.5 | 1.6 | 1.7 | 1.9 |

Tab. 2 Nominal thickness of the panel and average value of the equivalent thickness of lead for the energy range 50-300 keV

| Kind of panel | Thickness (mm) | Average thickness of equivalent lead (mm) in the range 50-300 keV |
|---|---|---|
| A | 10 | 0.9 |
| B | 15 | 1.3 |
| A+A | 20 | 1.8 |
| A+B | 25 | 2.3 |
| B+B | 30 | 2.7 |

The foregoing description of specific exemplary embodiments will so fully reveal the invention according to the conceptual point of view, so that others, by applying current knowledge, will be able to modify and/or adapt in various applications the specific exemplary embodiments without further research and without parting from the invention, and, accordingly, it is meant that such adaptations and modifications will have to be considered as equivalent to the specific embodiments. The means and the materials to realise the different functions described herein could have a different nature without, for this reason, departing from the field of the invention. it is to be understood that the phraseology or terminology that is employed herein is for the purpose of description and not of limitation

**Claims**

1. Improved structure of composite soundproofing material comprising:

    - at least one container body (10) having at least one recess (15);
    - a filling material (50) arranged, in use, in said, or each, recess (15) of said container body (10);

    **characterized in that** said filling material comprises a predetermined amount of barite in granules having a predetermined size, in such a way that a composite material is obtained having a high mass for the high density of the barite and, accordingly, under the same available volume, capable of ensuring a most effective acoustic insulation with respect to the prior art solutions.

2. Improved structure of composite soundproofing material, according to claim 1, wherein said granules of barite have a size set between 0.06 and 2 mm, in such a way that said barite is in the form of sand.

3. Improved structure of composite soundproofing material, according to claim 1, wherein said filling material in addition to the barite comprises at least one component selected from the group consisting of:

- siliceous sand;
- quartz sand;
- balls of expanded glass;
- glass powder;
- granules of plastic material, in particular recycled plastic material;
- or a combination thereof.

4. Improved structure of composite soundproofing material, according to claim 1, **characterized in that** a layer of predetermined thickness of resilient material is also provided, said layer of resilient material arranged, in use, adjacent to said container body (10), in such a way to obtain a structure of composite material having a high soundproofing action for the "mass-spring-mass" law.

5. Improved structure of composite soundproofing material, according to claim 4, wherein said layer of resilient material is selected from the group consisting of:

- a layer of rubber in the form of granules having a predetermined size;
- a slab of rubber;
- a layer of packaging material, in particular pluriball;
- a layer of expanded polyethylene, in particular expanded reticulated polyethylene.

6. Improved structure of composite soundproofing material, according to claim 4, wherein said layer of resilient material has a thickness set between 0.3 and 20 mm.

7. Improved structure of composite soundproofing material, according to claim 4, wherein said layer of resilient material has a thickness set between 0.4 and 15 mm.

8. Improved structure of composite soundproofing material, according to claim 1, comprising:

- a plurality of overlapped container bodies (10), in order to form a stack (110) of container bodies (10), at least one container body (10) of said plurality arranged to contain, in use, a respective filling material (50) consisting of a predetermined amount of barite in granules;
- at least one layer of resilient material located between two successive container bodies (10) of said stack (110).

9. Improved structure of composite soundproofing material, according to claim 1, wherein are provided:

- a first container body (10a) arranged to contain a first filling material (50a) comprising granules of barite in an amount at least equal to 40% of the total volume of said first filling material (50a);
- a layer of predetermined thickness of a resilient material adjacent, in use, to said first container body (10a);
- a second container body (10b) arranged adjacent to said layer of resilient material (70) opposite to said first container body (10a), said second container body (10b) arranged to contain a second filling material (50b) selected from the group consisting of:

- barite in granules;
- siliceous sand;
- quartz sand;
- balls of expanded glass;
- glass powder;
- granules of plastic material, in particular recycled plastic material;
- or a combination thereof.

10. Improved structure of composite soundproofing material, according to any one of the previous claims, wherein said, or each, container body (10) comprises at least one panel of wavy cardboard having at least one wall (11) arranged to divide said recess in a plurality of recesses.

11. Improved structure of composite soundproofing material, according to any one of the previous claims, wherein said, or each, container body (10) is made of a resilient material.

12. Improved structure of composite soundproofing material, according to any one of the previous claims, wherein said predetermined amount of barite present in said filling material is equal to, or higher than 40% of the total volume of said filling material.

13. Improved structure of composite soundproofing material, according to any one of the previous claims, wherein said predetermined amount of barite present in said filling material is equal to, or higher than 70% of the total volume of said filling material.

14. Improved structure of composite soundproofing material, according to any one of the previous claims, wherein said filling material of said, or each, container body (10) is constituted exclusively of barite.

**Fig. 1**

**Fig. 2**

# Fig. 3

# Fig. 4

# Fig. 5

# Fig. 6

## Fig. 7

## Fig. 8

## Fig. 9

## Fig. 10

# Fig. 11

# Fig. 12

# Fig. 13

# Fig. 14

Europäisches
Patentamt

European
Patent Office

Office européen
des brevets

## EUROPEAN SEARCH REPORT

Application Number

EP 14 16 9989

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 3 652 360 A (HARTMAN SEYMOUR ET AL) 28 March 1972 (1972-03-28) * the whole document * | 1-10 | INV. B32B3/12 E04B1/74 E04C2/36 |
| A | DE 298 03 675 U1 (FAIST M GMBH & CO KG [DE]) 15 July 1999 (1999-07-15) * page 2, line 8 - line 19 * * page 4, line 22 - page 7, line 13; claims 1-16; figures 1-7 * | 1-10 | |
| A | US 2008/236943 A1 (ZICKELL THOMAS J [US] ET AL) 2 October 2008 (2008-10-02) * the whole document * | 1-10 | |

TECHNICAL FIELDS
SEARCHED      (IPC)

B32B
E04B
E04C

The present search report has been drawn up for all claims

| Place of search | Date of completion of the search | Examiner |
|---|---|---|
| Munich | 12 September 2014 | Chindia, Evangelia |

EPO FORM 1503 03.82 (P04C01)

## ANNEX TO THE EUROPEAN SEARCH REPORT
## ON EUROPEAN PATENT APPLICATION NO.

EP 14 16 9989

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2014

| Patent document cited in search report | | Publication date | Patent family member(s) | | Publication date |
|---|---|---|---|---|---|
| US 3652360 | A | 28-03-1972 | US | 3424270 A | 28-01-1969 |
| | | | US | 3652360 A | 28-03-1972 |
| DE 29803675 | U1 | 15-07-1999 | AT | 207020 T | 15-11-2001 |
| | | | DE | 29803675 U1 | 15-07-1999 |
| | | | EP | 1060094 A1 | 20-12-2000 |
| | | | PL | 341314 A1 | 09-04-2001 |
| | | | WO | 9944861 A1 | 10-09-1999 |
| US 2008236943 | A1 | 02-10-2008 | US | 2008236943 A1 | 02-10-2008 |
| | | | US | 2009288360 A1 | 26-11-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012076164 A
- DE 19709620
- DE 19812747
- US 3652360 A
- DE 29803675
- US 2008236943 A